# EUROPÄISCHE PATENTANMELDUNG

(11) **EP 1 755 016 A1**
(43) Veröffentlichungstag der Anmeldung: **21.02.2007**
(21) Anmeldenummer: 05090235.2
(22) Anmeldetag: 12.08.2005
(51) Int. Cl.: G06F 1/00

(54) **Verfahren zur Beschränkung des Dienstezugangs eines mit einem Kommunikationsendgerät verbindbaren Zusatzgerätes**

(71) Anmelder: SIEMENS AKTIENGESELLSCHAFT, 80333 München (DE); Fraunhofer-Gesellschaft zur Förderung der angewandten Forschung e.V., 80686 München (DE)
(72) Erfinder: Filipovic, Bartol, 63110 Rodgau (DE); Kuntze, Nicolai, 64293 Darmstadt (DE); Marhöfer, Michael Dr., 82041 Deisenhofen/Oberhaching (DE); Rauch, Thomas, 63801 Kleinostheim (DE); Schmidt, Andreas Dr., 65929 Frankfurt am Main (DE)
(74) Vertreter: Berg, Peter

(57) **Zusammenfassung**

Die Erfindung betrifft ein Verfahren zum Beschränken der Nutzung eines mit einem Kommunikationsendgerät (KEG) verbindbaren Zusatzgerätes (ZG). Bei diesem Verfahren wird ein kommunikationssteuerndes Endgerät-Steuerprogramm (ES) des Kommunikationsendgerätes auf Unverändertheit überprüft, und das Endgerät-Steuerprogramm wird gestartet, wenn es unverändert ist. Von dem Endgerät-Steuerprogramm wird eine das Zusatzgerät betreffende Datenkommunikation (DK1) zwischen dem Kommunikationsendgerät und einer oder mehrerer Diensteinrichtungen (D1, D2, D3) eines ersten Kommunikationsnetzes (KN1) ermöglicht, wobei von der einen oder von den mehreren Diensteinrichtungen ein das Zusatzgerät betreffender Dienst realisiert wird. Eine das Zusatzgerät betreffende Datenkommunikation (DK2) zwischen dem Kommunikationsendgerät und einer oder mehrerer Diensteinrichtungen (DX) eines anderen Kommunikationsnetzes (KN2) wird verhindert.

Weiterhin betrifft die Erfindung ein Zusatzgerät und ein Kommunikationsendgerät.

## Beschreibung

Die Erfindung betrifft ein Verfahren zum Beschränken der Nutzung eins mit einem Kommunikationsendgerät verbindbaren Zusatzgerätes, ein Kommunikationsendgerät und ein Zusatzgerät.

Bei der Nutzung von Kommunikationsnetzen (insbesondere von Mobilfunknetzen) können unterschiedliche Kommunikationsendgeräte verwendet werden, wie beispielsweise nach dem GSM-, GPRS- oder UMTS-Standard arbeitende Mobiltelefone, Personal Digital Assistants (PDAs) oder tragbare Rechner mit Mobilfunkschnittstelle. Derartige Kommunikationsendgeräte können mit verschiedensten Zusatzgeräten betrieben werden, welche mit den Kommunikationsendgeräten verbunden sind. Beispiele für derartige Zusatzgeräte sind eine externe Freisprecheinrichtung, eine Kamera oder ein GPS-Empfänger (GPS = Global Positioning System).

Der Erfindung liegt die Aufgabe zugrunde, ein Verfahren anzugeben, mit dem die Nutzung eines Zusatzgerätes beschränkt werden kann, sowie ein entsprechendes Zusatzgerät und ein Kommunikationsendgerät anzugeben.

Diese Aufgabe wird erfindungsgemäß gelöst durch ein Verfahren zum Beschränken der Nutzung eines mit einem Kommunikationsendgerät verbindbaren Zusatzgerätes, wobei bei dem Verfahren ein kommunikationssteuerndes Endgerät-Steuerprogramm des Kommunikationsendgerätes auf Unverändertheit überprüft wird, das Endgerät-Steuerprogramm gestartet wird, wenn es unverändert ist, von dem Endgerät-Steuerprogramm eine das Zusatzgerät betreffende Datenkommunikation zwischen dem Kommunikationsendgerät und einer oder mehrerer Diensteinrichtungen eines ersten Kommunikationsnetzes ermöglicht wird, wobei von der einen oder von den mehreren Diensteinrichtungen ein das Zusatzgerät betreffender Dienst realisiert wird, und eine das Zusatzgerät betreffende Datenkommunikation zwischen dem Kommunikationsendgerät und einer oder mehrerer Diensteinrichtungen eines anderen Kommunikationsnetzes verhindert wird.

Bei diesem Verfahren ist insbesondere vorteilhaft, dass von dem Endgerät-Steuerprogramm die das Zusatzgerät betreffende Datenkommunikation ausschließlich zu der einen oder zu den mehreren Diensteinrichtungen des ersten Kommunikationsnetzes ermöglicht wird und dass eine das Zusatzgerät betreffende Datenkommunikation zwischen dem Kommunikationsendgerät und einer oder mehrerer Diensteinrichtungen eines anderen Kommunikationsnetzes verhindert (d.h. nicht durchgeführt bzw. unterbunden) wird. Dadurch kann der das Zusatzgerät betreffende Dienst ausschließlich durch die Diensteinrichtung bzw. die Diensteinrichtungen des ersten Kommunikationsnetzes ermöglicht werden und mit diesem Zusatzgerät kann nur der Dienst der Diensteinrichtung bzw. der Diensteinrichtungen des ersten Kommunikationsnetzes genutzt werden. Eine solche Dienstnutzung kann daraufhin auch von Seiten des Kommunikationsnetzes abgerechnet werden. Durch das Verfahren wird sichergestellt, dass mittels des Kommunikationsendgerätes und/oder des Zusatzgerätes ausschließlich das Zusatzgerät betreffende Dienste des ersten Kommunikationsnetzes genutzt werden können und dass eine Nutzung von das Zusatzgerät betreffenden Diensten anderer Kommunikationsnetze nicht möglich ist. Somit findet eine Beschränkung statt auf die Nutzung von Diensten, die das Zusatzgerät betreffen und die von Elementen des ersten Kommunikationsnetzes angeboten werden.

Das erfindungsgemäße Verfahren kann so ablaufen, dass (z.B. mittels des Endgerät-Steuerprogramms) eine Kommunikation zwischen dem Zusatzgerät und dem Kommunikationsendgerät derart durchgeführt wird, dass von dem Zusatzgerät abgesendete Daten zu dem Kommunikationsendgerät übertragen werden. Dabei ist vorteilhaft, dass die von dem Zusatzgerät abgesendeten Daten (insbesondere ausschließlich) zu dem Kommunikationsendgerät übertragen werden und nicht zu anderen Kommunikationsendgeräten übertragen werden (beispielsweise zu Kommunikationsendgeräten des gleichen Typs, welche auch mit dem Zusatzgerät verbindbar wären). Dies kann insbesondere durch eine geeignete Ausgestaltung des Endgerätsteuerprogramms erreicht werden. Dieses Endgerätesteuerprogramm kann dabei so ausgestaltet sein, dass ausschließlich dieses Endgerätesteuerprogramm die von dem Zusatzgerät abgesendeten Daten empfangen kann. Dies lässt sich durch eine geeignete Kodierung oder Verschlüsselung der Daten realisieren.

Das erfindungsgemäße Verfahren kann so ablaufen, dass das Endgerät-Steuerprogramm auf Unverändertheit (z.B. auf Vorliegen von unerwünschten oder nicht autorisierten Veränderungen) überprüft wird mittels eines in das Kommunikationsendgerät integrierten vertrauenswürdigen Plattformmoduls. Hierbei ist von Vorteil, dass durch das Prüfen auf Unverändertheit eine Manipulation des Endgerätsteuerprogramms oder eine unberechtigte Veränderung des Endgerätsteuerprogramms zuverlässig erkannt werden kann. Mittels als solche bekannter integrierter vertrauenswürdiger Plattformmodule (die auch als "trusted platform module" bezeichnet werden) lässt sich diese Überprüfung einfach und zuverlässig durchführen.

Das Verfahren kann vorteilhafterweise so ablaufen, dass das Endgerät-Steuerprogramm auf Unverändertheit überprüft wird mittels einer Prüfsumme. Mittels der Prüfsumme (die auch als Hashwert bezeichnet wird) kann zuverlässig erkannt werden, ob das Endgerätsteuerprogramm (z.B. unzulässigerweise) verändert wurde oder nicht.

Das Verfahren kann so ablaufen, dass ein kommunikationssteuerndes Zusatzgerät-Steuerprogramm des Zusatzgerätes auf Unverändertheit überprüft wird, das Zusatzgerät-Steuerprogramm gestartet wird, wenn es unverändert ist, und mittels des Zusatzgerät-Steuerprogramms die Kommunikation zwischen dem Zusatzgerät und dem Kommunikationsendgerät derart durchgeführt wird, dass von dem Zusatzgerät abgesendete Daten (insbesondere ausschließlich) zu dem Kommunikationsendgerät übertragen werden. Dadurch wird vorteilhafterweise eine (unberechtigte) Veränderung des Zusatzgerät-Steuerprogramms bzw. eine Manipulation des Zusatzgerät-Steuerprogramms erkannt und eine Verwendung eines veränderten oder manipulierten Zusatzgerät-Steuerprogramms unterbunden. Wenn die Prüfung ergibt, dass das Zusatzgerät-Steuerprogramm unverändert ist, dann wird mittels des Zusatzgerät-Steuerprogramms (und beispielsweise mittels des Endgerät-Steuerprogramms) sichergestellt, dass von dem Zusatzgerät abgesendete Daten (insbesondere ausschließlich) zu dem Kommunikationsendgerät übertragen werden und von diesem benutzt werden können.

Vorteilhafterweise wird das Zusatzgerät-Steuerprogramm auf Unverändertheit überprüft mittels eines in das Zusatzgerät integrierten vertrauenswürdigen Plattformmoduls. Dadurch ist eine sichere und zuverlässige Überprüfung auf Unverändertheit möglich.

Das Verfahren kann auch so ablaufen, dass das Zusatzgerät-Steuerprogramm auf Unverändertheit überprüft wird mittels einer Prüfsumme. Mittels der Prüfsumme lässt sich die Unverändertheit zuverlässig überprüfen.

Das Verfahren kann so ablaufen, dass die von dem Zusatzgerät abgesendeten Daten verschlüsselt werden mittels eines Schlüssels, welcher sowohl beim Kommunikationsendgerät als auch beim Zusatzgerät vorliegt. Dadurch wird sichergestellt, dass von dem Zusatzgerät abgesendete Daten ausschließlich von dem Kommunikationsendgerät entschlüsselt und weiter verarbeitet werden können.

Bei dem Verfahren kann der Schlüssel in einem gesicherten Speicherbereich des Kommunikationsendgerätes und/oder des Zusatzgerätes abgespeichert werden. Die Speicherung in dem gesicherten Speicherbereich verhindert ein unberechtigtes Auslesen bzw. Kopieren des Schlüssels, um diesen beispielsweise bei einem anderen Zusatzgerät oder einem anderen Kommunikationsendgerät zu nutzen. Der gesicherte Speicherbereich kann in dem vertrauenswürdigen Plattformmodul angeordnet sein.

Das Verfahren kann so ausgestaltet sein, dass das Zusatzgerät dem ersten Kommunikationsnetz zugeordnet wird, indem ein in dem Zusatzgerät abgespeicherter öffentlicher Schlüssel des Zusatzgerätes mit einem Signierschlüssel signiert wird, welcher dem ersten Kommunikationsnetz zugeordnet ist. Dadurch kann auf einfache Weise eine Zuordnung bzw. Bindung des Zusatzgerätes an das erste Kommunikationsnetz bzw. an (z. B. unter der Kontrolle eines Netzwerkoperators des ersten Kommunikationsnetzes stehende) Einrichtungen des ersten Kommunikationsnetzes realisiert werden.

Das Verfahren kann so ablaufen, dass seitens des ersten Kommunikationsnetzes anhand des signierten öffentlichen Schlüssels überprüft wird, ob das Zusatzgerät dem ersten Kommunikationsnetz zugeordnet ist, wobei bei Vorliegen des öffentlichen Schlüssels, der mit dem Signierschlüssel signiert ist, erkannt wird, dass das Zusatzgerät dem ersten Kommunikationsnetz zugeordnet ist, oder bei Nichtvorliegen des öffentlichen Schlüssels, der mit dem Signierschlüssel signiert ist, erkannt wird, dass das Zusatzgerät nicht dem ersten Kommunikationsnetz zugeordnet ist. Dadurch ist die Überprüfung, ob das Zusatzgerät dem ersten Kommunikationsnetz zugeordnet ist, auf eine sehr einfache Art und Weise möglich, da bei dem ersten Kommunikationsnetz keine zusatzgerätindividuellen Daten gespeichert zu werden brauchen. Vielmehr ist es vorteilhafterweise ausreichend, wenn bei dem ersten Kommunikationsnetz Informationen über den verwendeten Signierschlüssel abgespeichert sind. Dabei ist weiterhin besonders vorteilhaft, dass mit einem einzigen Signierschlüssel die öffentlichen Schlüssel einer Vielzahl von Zusatzgeräten signiert werden können.

Die oben genannte Aufgabe wird ebenfalls gelöst durch ein Kommunikationsendgerät (welches mit einem Zusatzgerät verbindbar ist) mit einem kommunikationssteuernden Endgerät-Steuerprogramm, mittels dem eine das Zusatzgerät betreffende Datenkommunikation zwischen dem Kommunikationsendgerät und einer oder mehrerer Diensteinrichtungen eines ersten Kommunikationsnetzes ermöglicht wird, wobei von der einen oder von den mehreren Diensteinrichtungen ein das Zusatzgerät betreffender Dienst realisiert wird, und mittels dem eine das Zusatzgerät betreffende Datenkommunikation zwischen dem Kommunikationsendgerät und einer oder mehrerer Diensteinrichtungen eines anderen Kommunikationsnetzes verhindert wird, und mit einer Einrichtung, die das Endgerät-Steuerprogramm auf Unverändertheit überprüft und ein Starten des Endgerät-Steuerprogramms ermöglicht, wenn es unverändert ist.

Hierbei ist insbesondere vorteilhaft, dass von dem vor unberechtigter Veränderung geschützten Endgerät-Steuerprogramm eine das Zusatzgerät betreffende Datenkommunikation (insbesondere ausschließlich) zwischen dem Kommunikationsendgerät und der einen oder der mehreren Diensteinrichtungen des ersten Kommunikationsnetzes ermöglicht wird. Eine das Zusatzgerät betreffende Datenkommunikation zwischen dem Kommunikationsendgerät und einer oder mehrerer Diensteinrichtungen eines anderen Kommunikationsnetzes wird jedoch verhindert (d.h. nicht durchgeführt oder unterbunden).

Dabei kann die Einrichtung als ein vertrauenswürdiges Plattformmodul ausgestaltet sein, das in das Kommunikationsendgerät integriert ist.

Bei dem Kommunikationsendgerät kann die Einrichtung so ausgestaltet sein, dass sie mittels einer Prüfsumme das Endgerät-Steuerprogramm auf Unverändertheit überprüft. Mittels des vertrauenswürdigen Plattformmoduls bzw. mittels der Prüfsumme lässt sich sicher und zuverlässig überprüfen, ob das Kommunikationsendgerät (z.B. unberechtigterweise) verändert bzw. modifiziert wurde.

Das Kommunikationsendgerät kann ausgebildet sein zum Entschlüsseln von Daten, die von dem Zusatzgerät empfangen werden, mittels eines Schlüssels. Dieser Schlüssel kann beim Kommunikationsendgerät und beim Zusatzgerät vorliegen; in diesem Fall handelt es sich um einen symmetrischen Schlüssel.

Insbesondere kann das Kommunikationsendgerät einen gesicherten Speicherbereich zum Abspeichern des Schlüssels aufweisen.

Die oben genannte Aufgabe wird ebenfalls erfindungsgemäß gelöst durch ein Zusatzgerät (das mit einem Kommunikationsendgerät verbindbar ist) mit einem kommunikationssteuernden Zusatzgerät-Steuerprogramm, mittels dem eine Kommunikation zwischen dem Zusatzgerät und dem Kommunikationsendgerät derart durchgeführt wird, dass von dem Zusatzgerät abgesendete Daten zu dem Kommunikationsendgerät übertragen werden, und einer Einrichtung, die das Zusatzgerät-Steuerprogramm auf Unverändertheit überprüft und ein Starten des Zusatzgerät-Steuerprogramms ermöglicht, wenn es unverändert ist. Vorteilhafterweise wird von dem auf Unverändertheit geprüften Zusatzgerät-Steuerprogramm die Kommunikation zwischen dem Zusatzgerät und dem Kommunikationsendgerät derart durchgeführt, dass von dem Zusatzgerät abgesendete Daten (insbesondere ausschließlich) zu dem Kommunikationsendgerät übertragen werden. Damit wird verhindert, dass das Zusatzgerät mit einem anderen (beispielsweise typgleichen) Kommunikationsendgerät zusammenarbeitet und dabei z. B. eine Kommunikation zu diesem anderen Kommunikationsendgerät durchführt.

Bei dem Zusatzgerät kann die Einrichtung als ein vertrauenswürdiges Plattformmodul ausgestaltet sein, das in das Zusatzgerät integriert ist.

Weiterhin kann die Einrichtung so ausgestaltet sein, dass sie mittels einer Prüfsumme das Zusatzgerät-Steuerprogramm auf Unverändertheit überprüft. Mittels des vertrauenswürdigen Plattformmoduls oder mittels der Prüfsumme kann die Prüfung auf Unverändertheit sicher und zuverlässig durchgeführt werden.

Das Zusatzgerät kann ausgestaltet sein zum Verschlüsseln von zu dem Kommunikationsendgerät abzusendenden Daten mittels eines Schlüssels. Dabei kann dieser Schlüssel bei dem Kommunikationsendgerät und bei dem Zusatzgerät vorliegen; in diesem Fall handelt es sich um einen symmetrischen Schlüssel.

Das Zusatzgerät kann einen gesicherten Speicherbereich zum Abspeichern des Schlüssels aufweisen.

Das Zusatzgerät kann auch einen gesicherten Speicherbereich mit einem öffentlichen Schlüssel des Zusatzgerätes aufweisen, der mit einem Signierschlüssel signiert worden ist, welcher einem Kommunikationsnetz zugeordnet ist. Bei diesem gesicherten Speicherbereich kann es sich auch um den gesicherten Speicherbereich handeln, der zum Abspeichern des Schlüssels verwendet wird, welcher zum Verschlüsseln von zu dem Kommunikationsendgerät abzusendenden Daten dient.

Im Folgenden wird die Erfindung anhand von Ausführungsbeispielen näher erläutert. Dabei ist in
Figur 1 das Zusammenwirken eines Zusatzgeräts, eines Kommunikationsendgeräts und eines Kommunikationsnetzes, in
Figur 2 eine detaillierte Darstellung des Zusatzgeräts, des Kommunikationsendgeräts und eines Dienstes des Kommunikationsnetzes und in
Figur 3 ein Nachrichtenablaufdiagramm dargestellt.

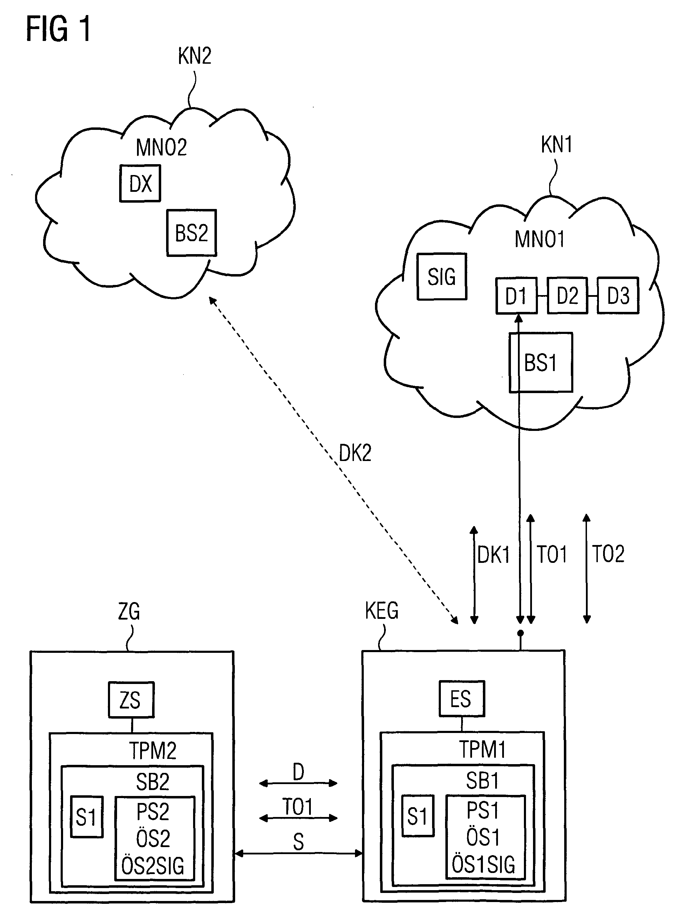

In Figur 1 ist ein Kommunikationsendgerät KEG in Form eines Mobiltelefons dargestellt. In einem anderen Ausführungsbeispiel kann beispielsweise auch ein Kommunikationsendgerät in Form eines PDAs (Personal Digital Assistant) oder eines Rechners mit einer Mobilfunkschnittstelle verwendet werden. Das Kommunikationsendgerät KEG ist mit einem vertrauenswürdigen Plattformmodul TPM1 (trusted platform module) ausgestattet.

In dem Kommunikationsendgerät KEG ist ein Endgerät-Steuerprogramm ES gespeichert, dass die Kommunikation des Kommunikationsendgeräts KEG mit einem Zusatzgerät ZG und mit einem ersten Kommunikationsnetz KN1 steuert. Beim Einschalten des Kommunikationsendgeräts wird das Endgerät-Steuerprogramm ES auf Unverändertheit überprüft. Diese Überprüfung erfolgt mittels des in das Endgerät integrierten vertrauenswürdigen Plattformmoduls TPM1 und wird beispielsweise ausgeführt, indem das Plattformmodul TPM1 eine Prüfsumme (Hash-Wert) des Endgerät-Steuerprogramms bildet und diese Prüfsumme mit einer früher abgespeicherten Soll-Prüfsumme vergleicht. Bei Übereinstimmung der Prüfsumme mit der Soll-Prüfsumme erkennt das Plattformmodul, dass das Endgerät-Steuerprogramm unverändert ist. Erst wenn festgestellt wurde, dass das Endgerät-Steuerprogramm unverändert ist, wird von dem vertrauenswürdigen Plattformmodul ein Starten des Endgerät-Steuerprogramms ermöglicht, indem ein Flag gesetzt wird. Daraufhin wird das Endgerät-Steuerprogramm auf dem Kommunikationsendgerät KEG gestartet.

Mit dem Kommunikationsendgerät KEG verbunden ist das Zusatzgerät ZG, bei dem es sich im Ausführungsbeispiel um eine Kamera handelt. In einem anderen Ausführungsbeispiel könnte auch ein Zusatzgerät in Form beispielsweise einer externen Freisprecheinrichtung, eines GPS-Moduls oder eines Akkus verwendet werden. Derartige Zusatzgeräte werden z.B. als Zubehörgeräte für Kommunikationsendgeräte angeboten. Solche Zusatzgeräte arbeiten mit dem Kommunikationsendgerät zusammen, um beispielsweise den Funktionsumfang des Kommunikationsendgerätes zu erweitern.

Im Ausführungsbeispiel ist das Zusatzgerät ZG über eine Steckerverbindung S mit dem Kommunikationsendgerät KEG verbunden, d. h. elektrische Kontakte verbinden das Zusatzgerät ZG mit dem Kommunikationsendgerät KEG. Das Zusatzgerät ZG kann aber auch mittels anderer Techniken mit dem Kommunikationsendgerät KEG verbunden sein, beispielsweise mittels drahtloser Kommunikationstechniken wie z.B. mittels der Funk-Technik Bluetooth, der Infrarot-Technik fastIrda oder mittels eines Wireless Local Area Networks WLAN. Bei dem Zusatzgerät braucht es sich nicht notwendigerweise um ein tragbares Gerät zu handeln, sondern das Zusatzgerät kann auch in Form z. B. einer unbeweglichen stationären Kamera oder in Form eines z. B. in einem Fahrzeug installierten GPS-Moduls vorliegen.

Das Zusatzgerät ZG ist mit einem zweiten vertrauenswürdigen Plattformmodul TPM2 ausgestattet. Die vertrauenswürdigen Plattformmodule TPM1 und TPM2 werden auch als "trusted platform module" bezeichnet und sind als solche beispielsweise aus der Druckschrift "TPM Main; Part 1; Design Principles; Specification Version 1.2; Revision 85 vom 13. Februar 2005 der Organisation TrustedComputingGroup, insbesondere aus Kap. 4 "TPM Architecture" bekannt. Mittels des vertrauenswürdigen Plattformmoduls TPM1 kann eine verlässliche Aussage über die Unverändertheit und/oder über die Sicherheit des Kommunikationsendgerätes KEG1 gemacht werden, mittels des vertrauenswürdigen Plattformmoduls TPM2 kann eine verlässliche Aussage über die Sicherheit und/oder über die Unverändertheit des Zusatzgerätes ZG gemacht werden.

In dem Zusatzgerät ZG ist ein Zusatzgerät-Steuerprogramm ZS gespeichert, dass die Kommunikation des Zusatzgeräts ZG mit dem Kommunikationsendgerät KEG steuert. Beim Einschalten des Zusatzgeräts überprüft das vertrauenswürdige Plattformmodul TPM2 das Zusatzgerät-Steuerprogramm ZS auf Unverändertheit. Erst wenn festgestellt wurde, dass das Zusatzgerät-Steuerprogramm unverändert ist, wird von dem vertrauenswürdigen Plattformmodul TPM2 ein Starten des Zusatzgerät-Steuerprogramms ermöglicht, indem ein Flag gesetzt wird. Daraufhin wird das Zusatzgerät-Steuerprogramm auf dem Zusatzgerät gestartet.

Das kommunikationssteuernde Zusatzgerät-Steuerprogramm des Zusatzgerätes ZG wird also auf Unverändertheit geprüft und nur gestartet, wenn es unverändert ist. Die Überprüfung erfolgt mittels des in das Zusatzgerät integrierten vertrauenswürdigen Plattformmoduls TPM2 und wird beispielsweise ausgeführt, indem das Plattformmodul TPM2 eine Prüfsumme (Hash-Wert) des Zusatzgerät-Steuerprogramms bildet und diese Prüfsumme mit einer früher abgespeicherten Soll-Prüfsumme vergleicht. Bei Übereinstimmung der Prüfsumme mit der Soll-Prüfsumme erkennt das Plattformmodul, dass das Zusatzgerät-Steuerprogramm unverändert ist.

Weiterhin ist in Figur 1 ein erstes Kommunikationsnetz KN1 dargestellt, welches von einem Netzwerkoperator MNO1 (mobile network operator 1) verwaltet wird. Die Infrastruktur des ersten Kommunikationsnetzes KN1 wird also durch den ersten Netzwerkoperator MNO1 verwaltet. In diesem ersten Kommunikationsnetz KN1 befindet sich neben einer beispielhaft dargestellten Basisstation BS1 eine Diensteinrichtung D1, welche einen das Zusatzgerät ZG betreffenden Dienst realisiert. Im Ausführungsbeispiel ist der durch die Diensteinrichtung D1 realisierte Dienst so ausgestaltet, dass von der Diensteinrichtung D1 (ggf. im Zusammenwirken mit weiteren Diensteinrichtungen D2 und D3 des Kommunikationsnetzes KN1) Bilder, die von der Kamera ZG aufgenommen wurden, weiterverarbeitet und an andere (in der Figur 1 nicht dargestellte) Kommunikationsendgeräte weiter geleitet werden. Dieser Dienst ist als ein Beispiel zu verstehen.

Weiterhin ist in Figur 1 ein zweites Kommunikationsnetz KN2 dargestellt, welches unter der Kontrolle eines zweiten Netzwerkoperators MNO2 steht. Die Infrastruktur des zweiten Kommunikationsnetzes KN2 wird von dem zweiten Netzwerkoperator MNO2 verwaltet. In diesem zweiten Kommunikationsnetz befindet sich neben einer beispielhaft dargestellten Basisstation BS2 eine Diensteinrichtung DX, welche ebenfalls einen Dienst zur Fotobearbeitung und Foto-Weiterleitung anbietet.

Im Folgenden wird das Verfahren zum Beschränken der Nutzung des Zusatzgerätes ZG detailliert erläutert.

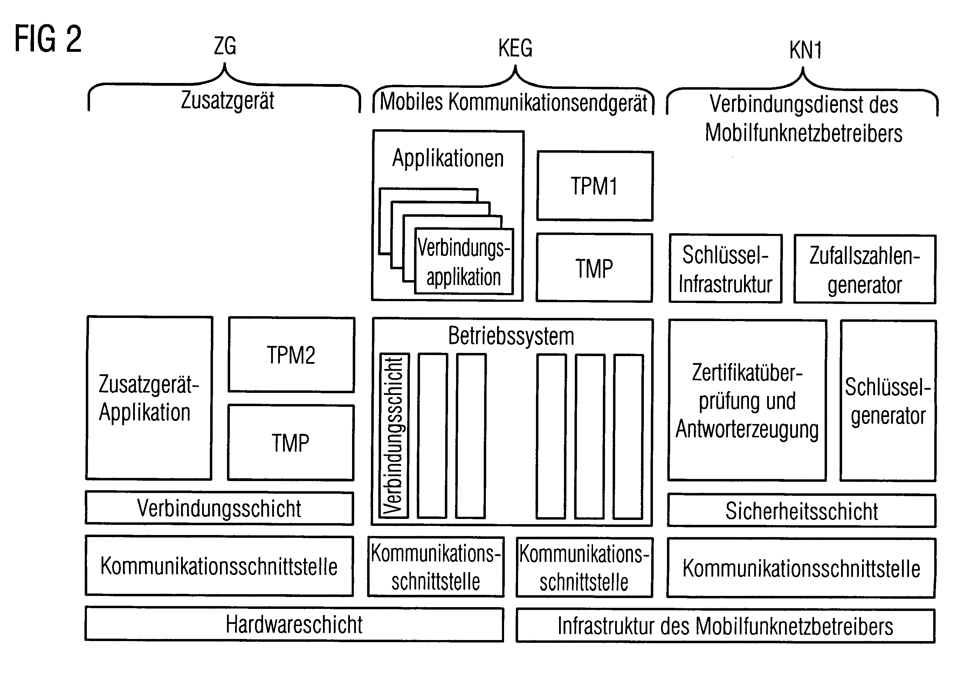

Eine erste vorbereitende Phase findet statt, wenn sich das Zusatzgerät ZG im Einflussbereich des Netzwerkoperators MNO1 des ersten Kommunikationsnetzes KN1 befindet (beispielsweise vor einem Verkauf des Zusatzgerätes ZG an den Nutzer des Kommunikationsendgerätes KEG). Diese Phase kann als "Take-Ownership-Phase" bezeichnet werden, weil in dieser Phase der Netzwerkoperator MNO1 des ersten Kommunikationsnetzes KN1 die Rolle des "Besitzers" (owners) des Zusatzgerätes ZG übernimmt. In dieser "Take-Ownership-Phase" wird für das Zusatzgerät ZG ein öffentlicher Schlüssel (public key) ÖS2 und ein privater Schlüssel (private key) PS2 erzeugt (d.h. ein sogenanntes public-private-Schlüsselpaar) und zu dem Zusatzgerät ZG übertragen. Dies geschieht mittels einer auf der rechten Seite der Figur 2 dargestellten Schlüssel-Infrastruktur (key infrastructure) und eines Schlüssel-Generators (key generator). Der öffentliche Schlüssel ÖS2 und der private Schlüssel PS2 werden in dem vertrauenswürdigen Plattformmodul TPM2 in einem gesicherten Speicherbereich SB2 (einem sog. "secure storage") abgespeichert. Der private Schlüssel PS2 wird dabei in dem gesicherten Speicherbereich SB2 derart abgespeichert, dass ein Auslesen dieses Schlüssels von außerhalb des vertrauenswürdigen Plattformmoduls TPM2 nicht mehr möglich ist. Der öffentliche Schlüssel ÖS2 des Zusatzgerätes ZG wird mit einem Signierschlüssel SIG signiert, welcher dem ersten Kommunikationsnetz KN1 zugeordnet ist. Beispielsweise kann dieser Signierschlüssel SIG dem Netzwerkbetreiber MNO1 zugeordnet sein. Der signierte öffentliche Schlüssel ÖS2SIG wird ebenfalls in dem gesicherten Speicherbereich SB2 des Zusatzgerätes ZG abgespeichert. Damit ist das Zusatzgerät ZG dem ersten Kommunikationsnetz KN1 bzw. dessen Netzwerkoperator MNO1 zugeordnet.

Die digitale Signatur des signierten öffentlichen Schlüssels ÖS2SIG ermöglicht die Überprüfung der Integrität der signierten Daten, hier also die Überprüfung der Integrität des signierten öffentlichen Schlüssels. Im Folgenden kann also eine Veränderung des öffentlichen Schlüssels während der Übermittlung oder Speicherung bemerkt werden. Außerdem ermöglicht die digitale Signatur eine Ermittlung der Herkunft der signierten Daten, d.h. eine Prüfung deren Authentizität. Zum Signieren kann beispielsweise das Protokoll PKCS#7 oder PKCS#12 verwendet werden; das Zertifikat kann beispielsweise das Format X.509 aufweisen. Die Signierung des öffentlichen Schlüssels ist insbesondere deshalb vorteilhaft, weil sie ermöglicht, das Zusatzgerät ZG und ggf. weitere Zusatzgeräte zentral in dem Kommunikationsnetz KN1 zu registrieren, ohne bei dem Kommunikationsnetz KN1 individuelle Daten der Zusatzgeräte abspeichern zu müssen. Sobald nämlich der öffentliche Schlüssel des Zusatzgerätes ZG mit dem Signaturschlüssel SIG signiert ist, kann sich das Zusatzgerät ZG gewissermaßen mit dem öffentlichen Schlüssel ÖS2SIG "ausweisen", d. h. anhand des signierten öffentlichen Schlüssels wird erkannt, dass der Netzwerkoperator MNO1 der "Besitzer" (= owner) des Zusatzgerätes ZG ist.

In gleicher Weise wird eine "Take-Ownership-Phase" für das Kommunikationsendgerät KEG durchgeführt, d. h. der Netzwerkoperator MNO1 übernimmt auch den "Besitz" (= Ownership) des Kommunikationsendgerätes KEG. Analog zu dem oben bezüglich des Zusatzgerätes ZG erläuterten Verfahren werden dabei für das Kommunikationsendgerät KEG ein öffentlicher Schlüssel ÖS1 und ein privater Schlüssel PS1 erzeugt und in einem gesicherten Speicherbereich SB1 des vertrauenswürdigen Plattformmoduls PTM1 abgespeichert. Der öffentliche Schlüssel ÖS1 wird mit dem Signierschlüssel SIG des Netzwerkoperators MNO1 signiert und der signierte öffentliche Schlüssel ÖS1SIG des Kommunikationsendgeräts KEG wird in dem gesicherten Speicherbereich SB1 abgespeichert. Damit ist der Netzwerkoperator MNO1 als Besitzer (= "owner") sowohl des Zusatzgerätes ZG als auch des Kommunikationsendgerätes KEG registriert; das Kommunikationsendgerät KEG ist dem ersten Kommunikationsnetz KN1 bzw. dessen Netzwerkoperator MNO1 zugeordnet. Die "Take-Ownership-Phase" bezüglich des Zusatzgerätes ZG ist in Figur 1 mittels eines Pfeils TO1 dargestellt, die "Take-Ownership-Phase" bezüglich des Kommunikationsendgerätes KEG ist in Figur 1 mittels eines Pfeils TO2 dargestellt.

Als nächstes findet eine zweite Phase statt, welche als eine "Initialisierungs-Phase" bezeichnet werden kann. Während dieser Initialisierungs-Phase befindet sich sowohl das Kommunikationsendgerät KEG als auch das Zusatzgerät ZG im Einflussbereich des Nutzers des Kommunikationsendgerätes KEG (das Zusatzgerät ZG wurde beispielsweise an den Nutzer des Kommunikationsendgerätes KEG verkauft oder verschenkt). Die Initialisierungs-Phase kann auch als eine "Phase der Schlüsselaushandlung" bezeichnet werden. Die Initialisierungs-Phase unterteilt sich in drei Teilphasen.

### Teilphase 1:

Die Teilphase 1 kann als "context establishment" bezeichnet werden. Während dieser Phase wird ein verschlüsselter Kommunikationskanal aufgebaut zwischen dem Kommunikationsendgerät KEG und dem Kommunikationsnetz KN1 (und zwar speziell zwischen dem Kommunikationsendgerät KEG und dem in Figur 2 dargestellten "MNO bonding service" (= Verbindungsdienst des Netzwerkoperators)). Dabei übermittelt das Kommunikationsendgerät KEG seinen signierten öffentlichen Schlüssel ÖS1SIG an das Kommunikationsnetz KN1; und anhand des signierten Schlüssels ÖS1SIG stellt das Kommunikationsnetz KN1 fest, dass das Kommunikationsendgerät KEG während der "Take-Ownership-Phase" dem ersten Kommunikationsnetz KN1 bzw. dessen Netzwerkoperator MNO1 zugeordnet wurde.

Daraufhin übermittelt das Zusatzgerät ZG seinen signierten öffentlichen Schlüssel ÖS2SIG an das Kommunikationsendgerät KEG, dieser signierte öffentliche Schlüssel ÖS2SIG des Zusatzgerätes ZG wird durch das Kommunikationsendgerät KEG an das Kommunikationsnetz KN1 weitergeleitet. Das Kommunikationsnetz KN1 bzw. der MNO-Bonding-Service erkennt anhand des signierten öffentlichen Schlüssels ÖS2SIG des Zusatzgerätes ZG, dass während der "Take-Ownership-Phase" das Zusatzgerät ZG dem ersten Kommunikationsnetz KN1 bzw. dessen Netzwerkoperator MNO1 zugeordnet wurde. Damit ist die Teilphase 1 abgeschlossen.

### Teilphase 2:

Nach erfolgreichem Abschluss der Teilphase 1 folgt die Teilphase 2, welche auch als "online attestation" oder "remote attestation" bezeichnet wird. Während der Teilphase 2 nimmt das Kommunikationsendgerät KEG Kontakt zu dem Kommunikationsnetz KN1 bzw. zu dem "MNO Bonding Service" auf und übermittelt eine Aussage über die Sicherheit und die Unverändertheit des Kommunikationsendgerätes KEG an den Netzwerkoperator MNO1. Dieser Schritt als solcher ist bekannt beispielsweise aus dem Dokument "Trusted Mobile Platform,
Protocol Specification Document, Rev. 1.00" vom 5.4.2004, insbesondere aus Kap. 5.5 "Integrity Reporting Protocol". Dieser Schritt wird durch das vertrauenswürdige Plattformmodul TPM1 durchgeführt. Bei erfolgreichem Abschluss der "online attestation" ist eine "Vertrauenswürdigkeit" des Kommunikationsendgerätes KEG sichergestellt, d. h. der Netzwerkoperator MNO1 kann darauf vertrauen, dass das Kommunikationsendgerät KEG1 bezüglich des beschriebenen Verfahrens erwartungsgemäß funktioniert und nicht von Dritten manipuliert wurde.

Eine gleichartige "online attestation" findet auch für das Zusatzgerät ZG statt, d. h. auch das Zusatzgerät ZG übermittelt (über das Kommunikationsendgerät KEG) eine Aussage über seine Unverändertheit und Sicherheit an den Netzwerkoperator MNO1.

### Teilphase 3:

Nachdem in Teilphase 2 die Sicherheit und Unverändertheit und damit die Vertrauenswürdigkeit sowohl des Kommunikationsendgerätes KEG als auch des Zusatzgerätes ZG überprüft wurde, werden durch den "MNO Bonding Service" des Netzwerkoperators MNO1 des Kommunikationsnetzes KN1 in der Teilphase 3 sowohl an das Kommunikationsendgerät KEG als auch an das Zusatzgerät ZG gemeinsame (symmetrische) Schlüssel S1 übermittelt. Der symmetrische Schlüssel für das Zusatzgerät ZG wird getrennt von dem symmetrischen Schlüssel für das Kommunikationsendgerät KEG verschlüsselt übertragen, nachdem er vom Netzwerkoperator MNO1 signiert worden ist. Der symmetrische Schlüssel S1 des Zusatzgerätes ZG wird in dem gesicherten Speicherbereich SB2 des vertrauenswürdigen Plattformmoduls TPM2 abgespeichert. Dadurch kann der symmetrische Schlüssel S1 des Zusatzgerätes ZG nicht von einem potentiellen Angreifer oder Hacker ausgelesen werden. Der symmetrische Schlüssel des Kommunikationsendgerätes KEG wird in dem gesicherten Speicherbereich SB1 des Kommunikationsendgerätes KEG abgespeichert, beispielsweise ebenfalls in dem "secure storage" des vertrauenswürdigen Plattformmoduls TPM1. Damit ist die Teilphase 3 und die Initialisierungsphase beendet.

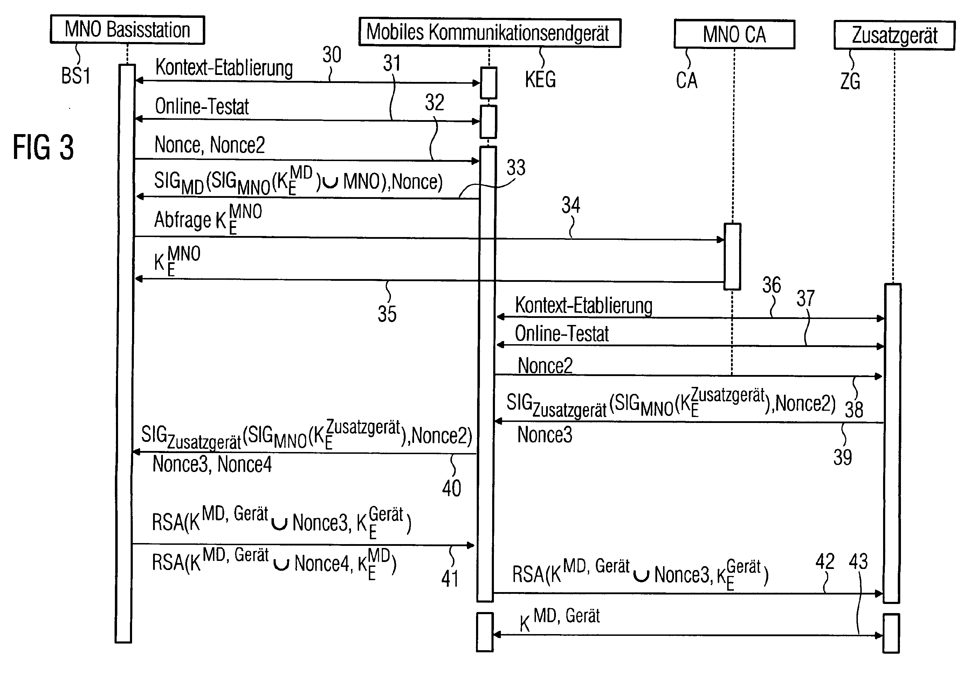

In Figur 3 ist die Initialisierungsphase noch einmal detailliert in einem Ablaufdiagramm dargestellt. Dargestellt ist der Nachrichtenaustausch zwischen dem Kommunikationsnetz KN1 (von dem hier lediglich die Basisstation BS1 abgebildet ist, linke senkrechte Linie), dem Kommunikationsendgerät KEG (zweite senkrechte Linie von links), einer Zertifizierungsstelle CA des Netzwerkoperators MNO1 (dritte senkrechte Linie von links) und dem Zusatzgerät ZG (rechte senkrechte Linie). Der zeitliche Ablauf verläuft von oben nach unten.

Zuerst erfolgt das oben erläuterte "context establishment" (Teilphase 1) zwischen dem Netzwerkoperator MNO1 und dem Kommunikationsendgerät KEG (Pfeil 30). Danach erfolgt die oben erläuterte "online attestation" (Teilphase 2) zwischen dem Netzwerkoperator und dem Kommunikationsendgerät KEG (Pfeil 31).

Danach werden in dem Kommunikationsnetz KN1 eine erste Zufallszahl (die in Figur 3 als "Nonce" bezeichnet wird) und eine zweite Zufallszahl (die in Figur 3 als "Nonce2" bezeichnet wird) erzeugt und über die Basisstation BS1 an das Kommunikationsendgerät KEG übermittelt (Pfeil 32). Diese Zufallszahlen dienen in den folgenden Schritten zur Unterdrückung von Wiedereinspielungsversuchen von alten Paketen durch eine dritte Instanz. Die Zufallszahlen dienen also zur Verhinderung von Manipulationsversuchen, die darauf basieren, dass Dritte während früherer Verfahrensabläufe mittels Nachrichtenpaketen übermittelte Nachrichten empfangen und gespeichert haben und diese aus früheren Verfahrensabläufen stammenden Pakete unberechtigterweise erneut verschicken (sog. "replay attack").

Im folgenden Schritt (Pfeil 33) überträgt das Kommunikationsendgerät KEG den durch den Netzwerkoperator MNO1 signierten öffentlichen Schlüssel ÖS1SIG (hier bezeichnet als SIG_{MNO}(K^{MD}_{E} U MNO)) zusammen mit der Zufallszahl "Nonce" über die Basisstation BS1 an das Kommunikationsnetz KN1 zurück. Dieses Paket wird durch das Kommunikationsendgerät KEG unter Verwendung des persönlichen Schlüssels PS1 signiert (hier symbolisiert als SIG_{MD}). Durch diese Informationen wird das Kommunikationsnetz KN1 in die Lage versetzt, den Schlüssel ÖS1 als vom Netzwerkoperator MNO1 legitimierten Schlüssel zu erkennen; dadurch können Wiedereinspielversuche ausgeschlossen werden. Hierzu wird von der Zertifikatverwaltung CA ein öffentlicher Schlüssel (hier bezeichnet als K^{MNO}_{E}) des Betreibers MNO1 abgefragt (Pfeil 34), welcher im nächsten Schritt (Pfeil 35) an das Kommunikationsnetz KN1 geliefert wird. Mittels dieses öffentlichen Schlüssels wird die Signatur ÖS1SIG geprüft, die zur Signierung der mittels Pfeil 33 dargestellten Nachricht verwendet wurde.

Daraufhin wird das oben erläuterte "context establishment" zwischen dem Kommunikationsendgerät KEG und dem Zusatzgerät ZG durchgeführt (Teilphase 1 der Initialisierungsphase, Pfeil 36). Hierdurch wird ein abhörsicherer Verbindungskanal zwischen dem Kommunikationsendgerät KEG und dem Zusatzgerät ZG gewährleistet.

Daraufhin erfolgt die online-attestation (Teilphase 2 der Initialisierungsphase) zwischen dem Zusatzgerät ZG und dem Kommunikationsendgerät KEG (Pfeil 37).

Daraufhin wird von dem Kommunikationsendgerät KEG die Zufallszahl Nonce2 an das Zusatzgerät ZG weitergereicht (Pfeil 38). Das Zusatzgerät ZG antwortet mit einem durch das Zusatzgerät ZG mittels des persönlichen Schlüssels PS2 signierten Paket, welches den signierten öffentlichen Schlüssel ÖS2SIG (hier bezeichnet als SIG_{MNO}(K^{Accessory}_{E}) sowie die Zufallszahl "Nonce2" enthält. Desweiteren wird eine weitere Zufallszahl "Nonce3" erzeugt und übermittelt (Pfeil 39).

Alle im letzten Schritt übermittelten Daten werden nun vom Kommunikationsendgerät KEG über die Basisstation BS1 an das Kommunikationsnetz KN1 weitergereicht. Zusätzlich wird eine weitere Zufallszahl "Nonce4" erzeugt und in dem Paket ebenfalls übermittelt (Pfeil 40).

Das Kommunikationsnetz KN1 erzeugt nun einen symmetrischen Schlüssel S1 (hier bezeichnet als K^{MD,Gadget}). Der symmetrische Schlüssel S1 wird mit dem öffentlichen Schlüssel ÖS1 des Kommunikationsendgeräts verschlüsselt, wobei gemeinsam mit dem symmetrischen Schlüssel S1 die Zufallszahl Nonce3 verschlüsselt wird. Letzteres verhindert ein (z.B. betrügerisches) Wiederverwenden ("Wiedereinspielen") von alten Paketen bzw. Nachrichten.

Zusätzlich wird der symmetrische Schlüssel S1 auch mit dem öffentlichen Schlüssel ÖS2 des Zusatzgerätes ZG verschlüsselt, wobei gemeinsam mit dem symmetrischen Schlüssel S1 die Zufallszahl Nonce4 verschlüsselt wird.

Beide resultierenden Pakete (d.h. ein Paket mit dem symmetrischen Schlüssel S1, der mit dem öffentlichen Schlüssel ÖS1 des Kommunikationsendgeräts verschlüsselt ist und ein Paket mit dem symmetrischen Schlüssel S1, der mit dem öffentlichen Schlüssel ÖS2 des Zusatzgeräts ZG verschlüsselt ist) werden daraufhin an das Kommunikationsendgerät KEG übertragen (Pfeil 41).

Das Kommunikationsendgerät KEG reicht das Paket mit dem symmetrischen Schlüssel S1, welches mit dem öffentlichen Schlüssel ÖS2 des Zusatzgeräts ZG verschlüsselt ist, an das Zusatzgerät ZG weiter (Pfeil 42). Mittels des Schlüssels S1 können daraufhin das Zusatzgerät ZG und das Kommunikationsendgerät KEG verschlüsselte Daten austauschen (Pfeil 43).

Während der Initialisierungsphase wurde also sowohl an das Zusatzgerät ZG als auch an das Kommunikationsendgerät KEG jeweils ein identischer geheimer (symmetrischer) Kommunikationsschlüssel S1 übermittelt, mit dem diese beiden Geräte interagieren können. Diese Schlüssel S1 wurden dem Zusatzgerät ZG und dem Kommunikationsendgerät KEG seitens des Netzwerkoperators MNO1 zugewiesen. Nur mittels dieser Schlüssel S1 kann das Zusatzgerät mit dem Kommunikationsendgerät kommunizieren und das Kommunikationsendgerät mit dem Zusatzgerät kommunizieren.

Nach erfolgreichem Abschluss der Initialisierungsphase können in der folgenden Phase (die als "Arbeitsphase" bezeichnet werden kann) das Kommunikationsendgerät KEG und das Zusatzgerät ZG ohne Einwirkung des Netzwerkoperators MNO1 bzw. des Kommunikationsnetzes KN1 direkt miteinander kommunizieren. Dies geschieht unter Nutzung des während der Initialisierungsphase an beide Geräte verteilten Schlüssels S1.

Während der Arbeitsphase wird in dem Kommunikationsendgerät KEG ein Betriebssystem verwendet, welches entsprechend den Spezifikationen des "trusted computing" ausgestaltet ist (ein sogenanntes trusted-computing-erweitertes-Betriebssystem). Ein derartiges Betriebssystem als solches ist bekannt und wird beispielsweise mittels des vertrauenswürdigen Moduls TPM1 des Kommunikationsendgerätes KEG realisiert. Mittels dieses Betriebssystems kann sichergestellt werden, dass ein Computerprogramm, welches der Kommunikationssteuerung für das Zusatzgerät ZG dient (Endgerät-Steuerprogramm), eine sichere Arbeitsumgebung vorfindet und nicht unbemerkterweise modifiziert oder verändert werden kann. Dies ist deshalb wichtig, weil in der Arbeitsphase die ausschließliche Verwendung des Zusatzgerätes in Verbindung mit dem Kommunikationsnetz KN1 bzw. in Verbindung mit dem Netzwerkoperator MNO1 durch das Endgerät-Steuerprogramm des Kommunikationsendgerätes KEG sichergestellt wird. Gelänge es, das Endgerät-Steuerprogramm zu manipulieren, dann könnte das Zusatzgerät auch im Zusammenwirken mit einem anderen Netzwerkoperator genutzt werden, beispielsweise mit dem Netzwerkoperator MNO2 des zweiten Kommunikationsnetzes KN2.

Während der Arbeitsphase kommuniziert das Zusatzgerät mit dem Kommunikationsendgerät (und umgekehrt) mittels des sowohl bei dem Kommunikationsendgerät KEG als auch bei dem Zusatzgerät ZG vorliegenden Schlüssels S1, welcher diesen Geräten in der Initialisierungsphase zugewiesen wurde.

Im Ausführungsbeispiel nimmt das Zusatzgerät ZG (Kamera) Bilder auf und verschlüsselt die Bild-Daten mit dem Schlüssel S1. Die verschlüsselten Daten D sendet das Zusatzgerät ZG unter Steuerung des Zusatzgerät-Steuerprogramms ZS an das Kommunikationsendgerät KEG ab. Das Kommunikationsendgerät KEG empfängt diese verschlüsselten Daten D und entschlüsselt sie mit dem bei dem Kommunikationsendgerät KEG vorliegenden symmetrischen Schlüssel S1. Somit ist sichergestellt, dass die Kommunikation zwischen dem Zusatzgerät und dem Kommunikationsendgerät derart durchgeführt wird, dass von dem Zusatzgerät abgesendete Daten D ausschließlich zu dem Kommunikationsendgerät übertragen werden können und diese Daten D nur von dem Kommunikationsendgerät (nach Entschlüsselung) weiterverwendet werden können. Mittels des Zusatzgerät-Steuerprogramms wird also die Kommunikation zwischen dem Zusatzgerät ZG und dem Kommunikationsendgerät KEG derart gesteuert, dass von dem Zusatzgerät abgesendete Daten ausschließlich zu dem Kommunikationsendgerät KEG übertragen werden und nicht zu einem anderen Kommunikationsendgerät.

In einem anderen Ausführungsbeispiel kann auch die gesamte Datenübertragung zwischen dem Zusatzgerät ZG und dem Kommunikationsendgerät KEG mittels des symmetrischen Schlüssels S1 verschlüsselt werden. Das bedeutet, dass nicht nur die Bild-daten verschlüsselt werden, sondern alle zu übertragenden Daten.

Da das Zusatzgerät ZG keinen eigenen Zugang (beispielsweise Funkzugang) zu dem Kommunikationsnetz KN1 und damit zur Infrastruktur des Netzwerkoperators MNO1 besitzt, arbeitet das Kommunikationsendgerät als Gateway bzw. als Proxy-Rechner. Beispielsweise sendet das Kommunikationsendgerät KEG die von dem Zusatzgerät ZG stammenden Daten an das Kommunikationsnetz KN1 weiter; ebenso sendet es in Gegenrichtung die von dem Kommunikationsnetz KN1 stammenden Daten an das Zusatzgerät ZG weiter.

Von dem in dem Kommunikationsendgerät KEG installierten Endgerät-Steuerprogramm ES wird also eine das Zusatzgerät ZG betreffende Datenkommunikation DK1 zwischen dem Kommunikationsendgerät KEG und der Diensteinrichtung D1 des ersten Kommunikationsnetzes KN1 ermöglicht, wobei von der Diensteinrichtung D1 der das Zusatzgerät betreffende Bildbearbeitungsdienst bzw. Bildweitersendedienst realisiert wird.

Wenn ein Nutzer des Kommunikationsendgerätes KEG versuchen würde, seine Bilder mittels der Diensteinrichtung DX des zweiten Kommunikationsnetzes KN2 weiter zu versenden, so würde diese das Zusatzgerät ZG betreffende Datenkommunikation DK2 zwischen dem Kommunikationsendgerät KEG und der Diensteinrichtung DX des anderen Kommunikationsnetzes KN2 von dem Kommunikationsendgerät KEG verhindert werden, weil das Endgerät-Steuerprogramm ES lediglich eine Datenkommunikation DK1 zu der Diensteinrichtung D1 realisiert. Das Endgerät-Steuerprogramm ist nämlich so ausgestaltet, dass dieses nur eine Datenkommunikation zu einer Diensteinrichtung des ersten Kommunikationsnetzes KN1 zulässt, jedoch keine Datenkommunikation zu Diensteinrichtungen anderer Kommunikationsnetze.

Bei der Kommunikation zwischen dem Zusatzgerät ZG und dem Kommunikationsendgerät KEG können verschiedenste Kommunikationsverfahren eingesetzt werden. Insbesondere können Funk-Kommunikationsverfahren eingesetzt werden, weil auch bei Funk-Kommunikationsverfahren die Sicherheit aufgrund des kryptografischen Schutzes der Daten (Ver- und Entschlüsselung mittels der symmetrischen Schlüssel) gewährleistet ist.

Anhand von Figur 2 wird im Folgenden erläutert, welche Einheiten im Ausführungsbeispiel in dem Zusatzgerät ZG, im Kommunikationsendgerät KEG sowie im Kommunikationsnetz KN1 vorhanden sind.

Auf der linken Seite der Figur 2 ist das Zusatzgerät ZG ("Accessory") dargestellt. Dieses Zusatzgerät ZG enthält als Sicherheitsbasis das vertrauenswürdige Plattformmodul TPM2. Dieses Modul TPM2 ist in der Lage, Zufallszahlen zu generieren, Signaturen zu erzeugen, Schlüssel zu speichern und Nachrichten zur Kommunikation zu verschlüsseln und zu entschlüsseln. Auf diese Fähigkeiten aufbauend wird "trusted computing" TC durchgeführt und es werden TMP-Protokolle verwendet (TMP = trusted mobile platform). In diesem Zusammenhang ist die sichere Verwahrung von Daten (secure storage) eine wichtige Fähigkeit des Moduls TPM2. Es werden TMP-Protokolle zur "online attestation", zum "context establishment" und zum "key management" verwendet.

Die Kommunikation zwischen dem Zusatzgerät ZG und dem Kommunikationsendgerät KEG findet beispielsweise über einen Steckkontakt statt (hardware layer). Sowohl das Zusatzgerät ZG als auch das Kommunikationsendgerät KEG ist mit einem Interface ausgestattet (communication interface). Die Kommunikation zwischen dem Zusatzgerät-Programm (accessory application) und dem mobilen Gerät KEG wird durch den "bonding layer" kontrolliert und verschlüsselt. Dieser "bonding layer" führt auch den zusatzgeräteseitigen Teil der Initialisierungsphase durch. Die Nutzung bzw. Verwendung des Zusatzgerät-Programms (accessory application) wird beschränkt.

Aufgrund der kryptografischen Verschlüsselungsmechanismen können bei der Kommunikation zwischen dem Zusatzgerät ZG und dem Kommunikationsendgerät KEG eine Vielzahl von Kommunikationsverfahren verwendet werden. Da im Ausführungsbeispiel beim Zusatzgerät nicht alle Funktionalitäten der "trusted mobile platform" TMP Anwendung finden, genügt ggf. auch eine teilweise Implementierung der TMP-Spezifikation für das Zusatzgerät. Dies hat den Vorteil, dass auch leistungsschwache Prozessoren bei dem Zusatzgerät Verwendung finden können. Spezielle aufwendig zusätzlich zu realisierende mathematische Fähigkeiten werden bei dem Zusatzgerät ebenfalls nicht benötigt, da diese durch die "trusted mobile platform" TMP bereitgestellt werden.

Im mittleren Teil der Figur 2 ist das Kommunikationsendgerät KEG (mobile device) dargestellt. In dem Kommunikationsendgerät KEG ist das vertrauenswürdige Plattformmodul TPM1 enthalten. Mittels dieses Moduls TPM1 kann die Identität des Kommunikationsendgerätes zuverlässig festgestellt werden. Mittels des vertrauenswürdigen Plattformmoduls TPM1 wird auch bei dem mobilen Kommunikationsendgerät KEG "trusted computing" TC und eine "trusted mobile platform" TMP realisiert.

Im Unterschied zu dem Zusatzgerät ist beim Kommunikationsendgerät KEG eine vollständige Implementierung der TMP-Protokolle vorgesehen, da hier beispielsweise auch Verschlüsselungs-Protokolle (SSL-Protokolle, SSL = secure socket layer) verwendet werden und zudem für eine sichere Arbeitsumgebung der Programme gesorgt wird.

Das Kommunikationsendgerät KEG verfügt über zwei Schnittstellen: eine Schnittstelle zum Zusatzgerät ZG und eine zweite Schnittstelle für die Kommunikation mit dem Kommunikationsnetz KN1 bzw. mit dem Netzwerkoperator MNO1. Zu den im Kommunikationsendgerät KEG ablaufenden Programmen gehört ein Programm "bonding application", welches die Kommunikation mit einem Dienst "MNO bonding service" realisiert, der im Kommunikationsnetz KN1 durch den Netzwerkoperator MNO1 angeboten wird.

Im rechten Teil der Figur 2 sind Elemente zur Realisierung des Dienstes "MNO bonding service" dargestellt. Dieser Dienst wird durch den Netzwerkoperator MNO1 angeboten. Dieser Dienst überprüft unter anderem die Signaturen der öffentlichen Schlüssel des Zusatzgerätes und des Kommunikationsendgerätes. Außerdem führt dieser Dienst die "online attestation" durch und generiert, signiert und verschlüsselt die zu übertragenden symmetrischen Schlüssel.

Das Kommunikationsendgerät KEG baut über sein Interface (Communication Interface) eine Verbindung zu dem Dienst "MNO Bonding Service" auf. Eine "Security Layer" übernimmt dabei dienstseitig die SSL-Verschlüsselung und wird durch einen sicheren Schlüsselgenerator (Key Generator) unterstützt. Es ist vorteilhaft, wenn sich dieser Schlüsselgenerator eines per Hardware realisierten Zufallszahlengenerators bedient. Eine "Key Infrastructure" dient der Überprüfung von übermittelten Signaturen. Mittels einer Einheit "Certificate Verification and Response Generation" wird der symmetrische Schlüssel S1 erzeugt, signiert und verschlüsselt und daraufhin sowohl an das Kommunikationsendgerät KEG als auch an das Zusatzgerät ZG versendet. Ein vertrauenswürdiges Plattformmodul ist beim Dienst "MNO Bonding Service" nicht erforderlich.

Es wurde beschrieben, wie ein Zusatzgerät zu einem Kommunikationsnetz bzw. zu einem Netzwerkoperator dieses Kommunikationsnetzes zugeordnet werden kann und damit an dieses Kommunikationsnetz bzw. an diesen Netzwerkoperator gebunden werden kann. Dadurch wird die Nutzung dieses Zusatzgerätes beschränkt; dieses Zusatzgerät betreffende Dienste können nur von einer oder von mehreren Diensteinrichtungen genau dieses Kommunikationsnetzes angeboten werden, jedoch nicht von Diensteinrichtungen anderer Kommunikationsnetze.

Bei der beschriebenen Lösung tritt vorteilhafterweise nur ein geringes Kommunikationsaufkommen zwischen dem unter der Verwaltung des Netzwerkbetreibers stehenden Kommunikationsnetz und dem Kommunikationsendgerät KEG auf, so dass die Infrastruktur des Kommunikationsnetzes bzw. des Netzwerkoperators nur wenig belastet wird. Vorteilhafterweise findet nämlich ein erheblicher Teil der Kommunikation direkt zwischen dem Zusatzgerät ZG und dem Kommunikationsendgerät KEG statt, beispielsweise über eine Steckverbindung, eine Bluetooth-Verbindung oder eine WLAN-Verbindung. Es können vorteilhafterweise verschiedenste Kommunikationskanäle zwischen dem mobilen Gerät KEG und dem Zusatzgerät ZG verwendet werden, beispielsweise auch funkbasierte Kommunikationskanäle.

Das Zusatzgerät kann vorteilhafterweise an beliebige Nutzer von Kommunikationsendgeräten weiter gegeben werden, da sichergestellt ist, dass die das Zusatzgerät betreffenden Dienste nur von dem Kommunikationsnetz angeboten werden können, jedoch nicht von anderen Kommunikationsnetzen.

Ein weiterer Vorteil besteht darin, dass seitens des Kommunikationsnetzes KN1 (z. B. von dem Netzwerkoperator MNO1) keine Daten der einzelnen Zusatzgeräte gespeichert zu werden brauchen. Es ist ausreichend, den zur Signatur verwendeten Signaturschlüssel SIG zu speichern, um anhand der signierten öffentlichen Kennungen sowohl das Zusatzgerät als auch das Kommunikationsendgerät sicher wieder zu erkennen. Wenn man berücksichtigt, dass mit einem Signaturschlüssel eine große Anzahl von öffentlichen Kennungen für Zusatzgeräte und Kommunikationsendgeräte signiert werden können, wird deutlich, dass dadurch eine erhebliche Vereinfachung erreicht wird und eine aufwendige Datenspeicherung seitens des Netzwerkoperators bzw. des Kommunikationsnetzes KN1 vermieden wird.

Vorteilhafterweise wird nach Abschluss der Initialisierungsphase in der Arbeitsphase die Kommunikation zwischen dem Kommunikationsendgerät KEG und dem Zusatzgerät KG mittels des symmetrischen Kommunikationsschlüssels S1 abgesichert; das "Freischalten" des Zusatzgerätes für ein bestimmtes Kommunikationsendgerät in der Initialisierungsphase ist somit nur einmalig notwendig.

Es wurde als ein mögliches Anwendungsbeispiel beschrieben, dass ein Kameramodul als Zusatzgerät ZG eingesetzt wird. Dieses Kameramodul ZG wird in der Initialisierungsphase an das mobile Kommunikationsendgerät KEG eines Kunden gekoppelt. Mit dem Kameramodul ZG können dann beliebig viele Bilder gemacht werden, und diese Bilder können zu dem Kommunikationsendgerät KEG übertragen werden. Wenn jedoch diese Bilder an andere Kommunikationsendgeräte weiter gesendet werden sollen, dann wird dafür zwingend das Kommunikationsnetz KN1, d. h. die Infrastruktur des Netzwerkoperators MNO1 benötigt. Ein Weiterversenden der Bilder mittels anderer Kommunikationsnetze bzw. mit der Infrastruktur anderer Netzwerkoperatoren ist nicht möglich. Dieser das Zusatzgerät betreffende Dienst des Weiterversendens der Bilder kann mit Gebühren belegt und entsprechend abgerechnet werden.

In einem weiteren Anwendungsbeispiel kann das Zusatzgerät als GPS-Navigationssystem ausgebildet sein. Das GPS-Navigationssystem kann nach der Initialisierungsphase nur zusammen mit dem jeweiligen Kommunikationsendgerät KEG verwendet werden und zeigt die aktuelle Position an. Diese Positionsanzeige erfolgt unabhängig von dem Kommunikationsnetz KN1 und ohne Benutzung der Infrastruktur des Netzwerkoperators. Erst wenn ein das Zusatzgerät betreffender Dienst genutzt werden soll (beispielsweise die Übertragung von zur aktuellen Position des Navigationssystems passenden Staumeldungen oder von einer aktualisierten Landkarte), dann kann dieser Dienst ausschließlich mittels des Kommunikationsnetzes KN1 angeboten werden, und die Dienstnutzung kann entsprechend vergebührt und abgerechnet werden.

Abkürzungen und Bezeichnungen

| | |
|---|---|
| accessory application | Zusatzgerät-Applikation |
| applications | Applikationen, Programme |
| bonding application | Verbindungsprogramm |
| bonding layer | Verbindungsschicht |
| BS1 | Basisstation 1, base station 1 |
| BS2 | Basisstation 2, base station 2 |
| certificate verification and response generation | Zertifikatüberprüfung und Antworterzeugung |
| communication interface | Kommunikationsschnittstelle |
| D | Daten |
| D1, D2, D3 | Diensteinrichtungen des Kommunikationsnetzes KN1 |
| DK1 | Datenkommunikation 1 |
| DK2 | Datenkommunikation 2 |
| DX | Diensteinrichtung des zweiten Kommunikationsnetzes |
| ES | Endgerät-Steuerprogramm |
| hardware layer | Hardwareschicht |
| KEG | Kommunikationsendgerät |
| key generator | Schlüsselgenerator |
| key infrastructure | Schlüsselinfrastruktur |
| KN1 | Kommunikationsnetz 1 |
| KN2 | Kommunikationsnetz 2 |
| MNO bonding service | Verbindungsdienst des Mobilfunknetzbetreibers |
| MNO CA | Zertifikatverwaltung des Mobilfunknetzbetreibers, mobile network operator certificate authority |
| MNO infrastructure | Infrastruktur des Mobilfunknetzbetreibers |
| MNO1 | Mobilfunknetzbetreiber 1, mobile network operator 1 |
| MNO2 | Mobilfunknetzbetreiber , mobile network operator 2 |
| mobile device | Mobiles Kommunikationsendgerät |
| operating system | Betriebssystem |
| ÖS1 | öffentlicher Schlüssel 1, public key 1 |
| ÖS1SIG | signierter öffentlicher Schlüssel 1 |
| ÖS2 | öffentlicher Schlüssel 2, public key 2 |
| ÖS2SIG | signierter öffentlicher Schlüssel 2 |
| PS1 | privater Schlüssel 1, private key 1 |
| PS2 | privater Schlüssel 2, private key 2 |
| random number generator | Zufallszahlengenerator |
| S | Steckerverbindung |
| S1 | Schlüssel 1 |
| SB1 | gesicherter Speicherbereich 1 |
| SB2 | gesicherter Speicherbereich 2 |
| security layer | Sicherheitsschicht |
| SIG | Signierschlüssel |
| TMP | Vertrauenswürdige mobile Plattform, trusted mobile platform |
| TO1 | take ownership 1 |
| TO2 | take ownership 2 |
| TPM1 | Vertrauenswürdiges Plattformmodul 1, trusted platform module 1 |
| TPM2 | vertrauenswürdiges Plattformmodul 2, trusted platform module 2 |
| ZG | Zusatzgerät, accessory |
| ZS | Zusatzgerät-Steuerprogramm |

## Patentansprüche

1. Verfahren zum Beschränken der Nutzung eines mit einem Kommunikationsendgerät (KEG) verbindbaren Zusatzgerätes (ZG),
wobei bei dem Verfahren
- ein kommunikationssteuerndes Endgerät-Steuerprogramm (ES) des Kommunikationsendgerätes (KEG) auf Unverändertheit überprüft wird,
- das Endgerät-Steuerprogramm (ES) gestartet wird, wenn es unverändert ist,
- von dem Endgerät-Steuerprogramm (ES) eine das Zusatzgerät (ZG) betreffende Datenkommunikation (DK1) zwischen dem Kommunikationsendgerät (KEG) und einer oder mehrerer Diensteinrichtungen (D1, D2, D3) eines ersten Kommunikationsnetzes (KN1) ermöglicht wird, wobei von der einen oder von den mehreren Diensteinrichtungen (D1, D2, D3) ein das Zusatzgerät (ZG) betreffender Dienst realisiert wird, und
- eine das Zusatzgerät (ZG) betreffende Datenkommunikation (DK2) zwischen dem Kommunikationsendgerät (KEG) und einer oder mehrerer Diensteinrichtungen (DX) eines anderen Kommunikationsnetzes (KN2) verhindert wird.

2. Verfahren nach Anspruch 1,
**dadurch gekennzeichnet, dass**
- eine Kommunikation zwischen dem Zusatzgerät (ZG) und dem Kommunikationsendgerät (KEG) derart durchgeführt wird, dass von dem Zusatzgerät (ZG) abgesendete Daten (D) zu dem Kommunikationsendgerät (KEG) übertragen werden.

3. Verfahren nach Anspruch 1 oder 2,
**dadurch gekennzeichnet, dass**
- das Endgerät-Steuerprogramm (ES) auf Unverändertheit überprüft wird mittels eines in das Kommunikationsendgerät integrierten vertrauenswürdigen Plattformmoduls (TPM1).

4. Verfahren nach einem der vorhergehenden Ansprüche,
**dadurch gekennzeichnet, dass**
- das Endgerät-Steuerprogramm (ES) auf Unverändertheit überprüft wird mittels einer Prüfsumme.

5. Verfahren nach einem der vorhergehenden Ansprüche,
**dadurch gekennzeichnet, dass**
- ein kommunikationssteuerndes Zusatzgerät-Steuerprogramm (ZS) des Zusatzgerätes (ZG) auf Unverändertheit überprüft wird,
- das Zusatzgerät-Steuerprogramm (ZS) gestartet wird, wenn es unverändert ist, und
- mittels des Zusatzgerät-Steuerprogramms (ZS) die Kommunikation zwischen dem Zusatzgerät (ZG) und dem Kommunikationsendgerät (KEG) derart durchgeführt wird, dass von dem Zusatzgerät (ZG) abgesendete Daten (D) zu dem Kommunikationsendgerät (KEG) übertragen werden.

6. Verfahren nach Anspruch 5,
**dadurch gekennzeichnet, dass**
- das Zusatzgerät-Steuerprogramm (ZS) auf Unverändertheit überprüft wird mittels eines in das Zusatzgerät (ZG) integrierten vertrauenswürdigen Plattformmoduls(TPM2).

7. Verfahren nach Anspruch 5 oder 6,
**dadurch gekennzeichnet, dass**
- das Zusatzgerät-Steuerprogramm (ZS) auf Unverändertheit überprüft wird mittels einer Prüfsumme.

8. Verfahren nach einem der vorhergehenden Ansprüche,
**dadurch gekennzeichnet, dass**
- die von dem Zusatzgerät (ZG) abgesendeten Daten (D) verschlüsselt werden mittels eines Schlüssels (S1), welcher sowohl beim Kommunikationsendgerät (KEG) als auch beim Zusatzgerät (ZG) vorliegt.

9. Verfahren nach Anspruch 8,
**dadurch gekennzeichnet, dass**
- der Schlüssel (S1) in einem gesicherten Speicherbereich (SB1, SB2) des Kommunikationsendgerätes (KEG) und/oder des Zusatzgerätes (ZG) abgespeichert wird.

10. Verfahren nach einem der vorhergehenden Ansprüche,
**dadurch gekennzeichnet, dass**
- das Zusatzgerät (ZG) dem ersten Kommunikationsnetz (KN1) zugeordnet wird, indem ein in dem Zusatzgerät (ZG) abgespeicherter öffentlicher Schlüssel (ÖS2) des Zusatzgerätes (ZG) mit einem Signierschlüssel (SIG) signiert wird, welcher dem ersten Kommunikationsnetz (KN1) zugeordnet ist.

11. Verfahren nach Anspruch 10,
**dadurch gekennzeichnet, dass**
- seitens des ersten Kommunikationsnetzes (KN1) anhand des signierten öffentlichen Schlüssels (ÖS2SIG) überprüft wird, ob das Zusatzgerät (ZG) dem ersten Kommunikationsnetz (KN1) zugeordnet ist, wobei
- bei Vorliegen des signierten öffentlichen Schlüssels (ÖS2SIG) erkannt wird, dass das Zusatzgerät (ZG) dem ersten Kommunikationsnetz (KN1) zugeordnet ist, oder
- bei Nichtvorliegen des signierten öffentlichen Schlüssels (ÖS2SIG) erkannt wird, dass das Zusatzgerät (ZG) nicht dem ersten Kommunikationsnetz (KN1) zugeordnet ist.

12. Kommunikationsendgerät (KEG), das mit einem Zusatzgerät (ZG) verbindbar ist, mit
- einem kommunikationssteuernden Endgerät-Steuerprogramm (ES), mittels dem eine das Zusatzgerät (ZG) betreffende Datenkommunikation (DK1) zwischen dem Kommunikationsendgerät (KEG) und einer oder mehrerer Diensteinrichtungen (D1, D2, D3) eines ersten Kommunikationsnetzes (KN1) ermöglicht wird, wobei von der einen oder von den mehreren Diensteinrichtungen (D1, D2, D3) ein das Zusatzgerät (ZG) betreffender Dienst realisiert wird, und mittels dem eine das Zusatzgerät (ZG) betreffende Datenkommunikation (DK2) zwischen dem Kommunikationsendgerät (KEG) und einer oder mehrerer Diensteinrichtungen (DX) eines anderen Kommunikationsnetzes (KN2) verhindert wird, und
- einer Einrichtung (TPM1), die das Endgerät-Steuerprogramm (ES) auf Unverändertheit überprüft und ein Starten des Endgerät-Steuerprogramms (ES) ermöglicht, wenn es unverändert ist.

13. Kommunikationsendgerät nach Anspruch 12,
**dadurch gekennzeichnet, dass**
- die Einrichtung als ein vertrauenswürdiges Plattformmodul (TPM1) ausgestaltet ist, das in das Kommunikationsendgerät (KEG) integriert ist.

14. Kommunikationsendgerät nach Anspruch 12 oder 13,
**dadurch gekennzeichnet, dass**
- die Einrichtung (TPM1) so ausgestaltet ist, dass sie das Endgerät-Steuerprogramm auf Unverändertheit überprüft mittels einer Prüfsumme.

15. Kommunikationsendgerät nach einem der Ansprüche 12 bis 14,
**dadurch gekennzeichnet, dass**
- es ausgebildet ist zum Entschlüsseln von von dem Zusatzgerät (ZG) empfangenen Daten (D) mittels eines Schlüssels (S1).

16. Kommunikationsendgerät nach einem der Ansprüche 12 bis 15,
**gekennzeichnet durch**
einen gesicherten Speicherbereich (SB1) zum Abspeichern des Schlüssels (S1).

17. Zusatzgerät (ZG), das mit einem Kommunikationsendgerät (KEG) verbindbar ist, mit
- einem kommunikationssteuernden Zusatzgerät-Steuerprogramm (ZS), mittels dem eine Kommunikation zwischen dem Zusatzgerät (ZG) und dem Kommunikationsendgerät (KEG) derart durchgeführt wird, dass von dem Zusatzgerät (ZG) abgesendete Daten (D) zu dem Kommunikationsendgerät (KEG) übertragen werden, und
- einer Einrichtung (TPM2), die das Zusatzgerät-Steuerprogramm (ZS) auf Unverändertheit überprüft und ein Starten des Zusatzgerät-Steuerprogramms (ZS) ermöglicht, wenn es unverändert ist.

18. Zusatzgerät nach Anspruch 17
**dadurch gekennzeichnet, dass**
- die Einrichtung als ein vertrauenswürdiges Plattformmodul (TPM2) ausgestaltet ist, das in das Zusatzgerät integriert ist.

19. Zusatzgerät nach Anspruch 17 oder 18
**dadurch gekennzeichnet, dass**
- die Einrichtung (TPM2) so ausgestaltet ist, dass sie das Zusatzgerät-Steuerprogramm (ZS) auf Unverändertheit überprüft mittels einer Prüfsumme.

20. Zusatzgerät nach einem der Ansprüche 17 bis 19,
**dadurch gekennzeichnet, dass**
- es ausgestaltet ist zum Verschlüsseln von zu dem Kommunikationsendgerät (KEG) abzusendenden Daten (D) mittels eines Schlüssels (S1).

21. Zusatzgerät nach einem der Ansprüche 17 bis 20, **gekennzeichnet, durch**
einen gesicherten Speicherbereich (SB2) zum Abspeichern des Schlüssels (S1).

22. Zusatzgerät nach einem der Ansprüche 17 bis 21, **gekennzeichnet, durch**
einen gesicherten Speicherbereich (SB2) mit einem öffentlichen Schlüssel(ÖS2SIG) des Zusatzgerätes (ZG), der mit einem Signierschlüssel (SIG) signiert worden ist, welcher einem Kommunikationsnetz (KN1) zugeordnet ist.
